# EUROPÄISCHE PATENTSCHRIFT

(11) **EP 1 166 493 B1**
(45) Veröffentlichungstag und Bekanntmachung des Hinweises auf die Patenterteilung: **27.04.2005**
(21) Anmeldenummer: 00907439.4
(22) Anmeldetag: 20.01.2000
(51) Int. Cl.: H04L 9/30, H04L 9/08, H04L 29/06

(54) **VORRICHTUNG UND VERFAHREN FÜR DIE SICHERE ELEKTRONISCHE DATENÜBERTRAGUNG**
DEVICE AND METHOD FOR SECURE ELECTRONIC DATA TRANSMISSION
DISPOSITIF ET PROCEDE PERMETTANT UNE TRANSMISSION ELECTRONIQUE SURE DES DONNEES

(30) Priorität: 29.03.1999 DE 19914225
(43) Veröffentlichungstag der Anmeldung: 02.01.2002
(73) Patentinhaber: Fraunhofer-Gesellschaft zur Förderung der angewandten Forschung e.V., 80686 München (DE)
(72) Erfinder: BRESSER, Bertram, D-66763 Dillingen (DE); PAUL, Volker, D-66386 St. Ingbert (DE)
(74) Vertreter: Gagel, Roland, Dr.
(86) Internationale Anmeldenummer: PCT/DE2000/000189
(87) Internationale Veröffentlichungsnummer: WO 2000/059155

(56) Entgegenhaltungen:
- EP-A- 0 869 652
- US-A- 5 751 813
- ISHII S ET AL: "A HIGH-SPEED PUBLIC KEY ENCRYPTION PROCESSOR" SYSTEMS & COMPUTERS IN JAPAN,US,SCRIPTA TECHNICA JOURNALS. NEW YORK, Bd. 29, Nr. 1, 1. Januar 1998 (1998-01-01), Seiten 20-31, XP000742968 ISSN: 0882-1666
- MENEZES, VAN OORSCHOT, VANSTONE: "Handbook of Applied Cryptography" , CRC PRESS , BOCA RATON, FLORIDA, USA; XP002139553ISBN: 0-8493-8523-7 Seite 524 -Seite 525

## Beschreibung

Die Erfindung betrifft eine Vorrichtung sowie ein Verfahren für die sichere elektronische Datenübertragung zwischen Endgeräten, die zeitweilig oder permanent mit einem Server verbunden sind.

Das Verfahren und die Vorrichtung sind insbesondere für die elektronische Weitergabe medizinischer Daten sehr gut geeignet.

Medizinische Daten stellen aus der rechtlichen Sicht des Datenschutzes eines der schützenswertesten Güter überhaupt dar. Für die elektronische Weitergabe medizinischer Daten über öffentlich zugängliche Netze, wie beispielsweise das Internet oder ein von außen zugängliches Verbundnetz, sind daher Sicherheitsmaßnahmen vorzusehen, die den bestmöglichen Schutz solcher Daten gewährleisten.

Die grundsätzlich für die Datenübertragung durch öffentliche Netze verfügbaren Sicherheitsmechanismen betreffen vor allem die Nutzung kryptographischer Verfahren zur Verschlüsselung der Daten. Hierbei werden in der Regel kryptographische Standardverfahren mit sicherem Austausch von Schlüsseln entsprechend X.509 eingesetzt. Dabei handelt es sich um symmetrische Verschlüsselungsverfahren, insbesondere für die Verschlüsselung großer Datenmengen, und um asymmetrische Verschlüsselungsverfahren unter Verwendung eines öffentlichen (sog. "public key") und eines privaten Schlüssels (sog. "private key"), wie das weitverbreitete RSA.

Die vorliegende Erfindung betrifft die Übertragung von Daten von einem Netzteilnehmer (Absender) zu einem anderen (Adressat bzw. Empfänger) über die Zwischenspeicherung auf einer Datenstation bzw. einem Server. Während bei der elektronischen Datenübertragung über das Netz von einem Teilnehmer zu einem bereits be-kannten Adressaten ein asymmetrisches Verschlüsselungsverfahren unter Verwendung des öffentlichen Schlüssels des Adressaten zur Verschlüsselung der Daten eine hohe Datensicherheit bietet, kann diese Vorgehensweise bei einem zum Zeitpunkt der Bereitstellung der Daten noch unbekannten Adressaten nicht eingesetzt werden.

Ein solcher Fall ergibt sich beispielsweise im medizinischen Bereich, wie weiter unten im Ausführungsbeispiel näher erläutert wird, wenn ein Arzt einem Patienten eine Überweisung an einen Kollegen ausstellt und die für den Arztkollegen bestimmten medizinischen Daten des Patienten auf elektronischem Wege bereitstellen will. Die Identität des Kollegen, den der Patient schließlich aufsuchen wird, ist zu diesem Zeitpunkt in vielen Fällen noch nicht bekannt.

Aus der EP 0 869 652 sind ein Verfahren und eine Vorrichtung zum sicheren Versenden elektronischer Dokumente unter Zwischenschaltung eines Servers bekannt. Bei dem vorgeschlagenen Verfahren wird ein Dokument bzw. ein dem Dokument anhängiger geheimer Schlüssel entweder in der Datenstation des Absenders oder auf einem nachgeschalteten Server mit dem öffentlichen Schlüssel des Adressaten verschlüsselt und an diesen weitergeleitet. Bei dem Verfahren dieser Druckschrift muss jedoch die Identität des Adressaten zum Zeitpunkt der Datenversendung bereits bekannt sein.

Die US 5,751,813 beschreibt einen Verschlüsselungs-Server zur gezielten Versendung von elektronischen Dokumenten oder Daten an unterschiedliche Empfänger. Damit soll erreicht werden, gerade beim Versenden der Dokumente an viele Empfänger die Verschlüsselung nicht an mobilen Geräten der Absender durchführen zu müssen, sondern diese Arbeit durch einen zentralen Server zu übernehmen, um die entsprechenden portablen Geräte zu entlasten. Auch bei dem Verfahren dieser Druckschrift müssen die Adressaten bei der Versendung der Daten dem Absender jedoch bereits bekannt sein.

Die Aufgabe der vorliegenden Erfindung besteht nun darin, eine Vorrichtung und ein Verfahren für die sichere elektronische Datenübertragung über den Server eines Netzwerkes bereitzustellen, bei dem der Adressat der Daten zum Zeitpunkt der Bereitstellung der Daten noch nicht bekannt sein muß.

Die Aufgabe wird mit der Vorrichtung und dem Verfahren nach den Ansprüchen 1 und 12 gelöst. Vorteilhafte Ausgestaltungen und Weiterbildungen des Verfahrens und der Vorrichtung sind Gegenstand der Unteransprüche.

Die erfindungsgemäße Vorrichtung für die sichere Übertragung bzw. Weiterleitung von verschlüsselten Daten von einer ersten Datenstation über eine zweite Datenstation (Server) zu einer dritten Datenstation eines Netzwerkes, die am Server des Netzwerkes installiert und betrieben werden muß, weist eine Eingangseinheit zum Empfangen von verschlüsselten Daten (des Absenders) von der ersten Datenstation sowie eines externen Schlüssels eines Anforderers (des Empfängers) von der dritten oder einer weiteren Datenstation auf. Weiterhin ist in der Vorrichtung eine Einheit zum Umschlüsseln der verschlüsselten Daten durch Entschlüsseln mit einem internen Schlüssel und erneutes Verschlüsseln mit dem externen Schlüssel vorgesehen. Der interne Schlüssel ist innerhalb der Vorrichtung in irgendeiner technischen Form abgelegt und von außerhalb der Vorrichtung nicht zugänglich. An einer Ausgangseinheit können die mit dem externen Schlüssel verschlüsselten Daten abgegriffen werden. Die Vorrichtung ist derart an oder in der zweiten Datenstation ausgebildet ist, dass die Einheit die Daten erst bei Anforderung durch die dritte Datenstation mit Hilfe des externen Schlüssels des Anforderers umschlüsselt und die Daten während der Umschlüsselung die Vorrichtung nicht verlassen, so dass sie nicht in unverschlüsselter Form außerhalb der Vorrichtung auf der zweiten Datenstation zugänglich sind.

Es versteht sich von selbst, daß die von der Vorrichtung zu verarbeitenden Daten so verschlüsselt sein müssen, daß sie mit dem internen Schlüssel der Vorrichtung entschlüsselt werden können. In der Vorrichtung werden somit nur für die Vorrichtung lesbare verschlüsselte Daten mit einem externen Schlüssel zur Neuverschlüsselung umgewandelt in neu verschlüsselte Daten, die für den Inhaber des bei einer entsprechenden Datenanforderung mit den Daten an die Vorrichtung übergebenen externen Schlüssels lesbar sind.

Hierbei ist es grundsätzlich möglich, die zu übertragenden Ursprungsdaten, d.h. beispielsweise medizinische Daten, von der Vorrichtung entschlüsseln sowie neu verschlüsseln zu lassen. Bei dem bevorzugten Einsatz der Vorrichtung, wie weiter unten ausgeführt, werden allerdings nicht die Ursprungsdaten selbst, sondern nur deren in verschlüsselter Form übertragener Schlüssel mit der Vorrichtung neu verschlüsselt.

In einer bevorzugten Ausführungsform weist die Vorrichtung zum Entschlüsseln der verschlüsselten Daten sowie zur Neuverschlüsselung der Daten eine Chipkarte als Träger des internen Schlüssels auf. Bei dieser Chipkarte handelt es sich vorzugsweise um eine Chipkarte eines zertifizierten Trust-Centers.

In einer weiteren Ausprägung können Verschlüsselung und Entschlüsselung ganz oder teilweise direkt durch eine aktive Chipkarte ausgeführt werden.

Eine weitere Möglichkeit besteht darin, eine nach dem Informations- und Kommunikationsdienste-Gesetz sowie Signaturgesetz geeignete Schaltung, gegebenenfalls Software-gesteuert als Einheit zur Ver- und Entschlüsselung einzusetzen.

Kern der erfindungsgemäßen Lösung ist eine Umschlüsselung eines den Daten anhängenden Schlüssels, im folgenden als Session-Key bezeichnet, so daß die Daten für einen der berechtigten Kommunikationspartner, den Adressaten, lesbar werden. Dazu wird ein für die symmetrische Verschlüsselung der Daten verwendeter Session-Key in einen ersten Teil und einen zweiten Teil aufgeteilt, so dass weder der erste noch der zweite Teil alleine die Entschlüsselung der verschlüsselten Daten ermöglicht. Der erste Teil wird mit dem im Server vorhandenen privaten Schlüssel des Servers entschlüsselt und sofort wieder mit dem öffentlichen Schlüssel des die Daten anfordernden Empfängers bzw. Adressaten verschlüsselt. Dieser Schlüssel ist vorzugsweise - z.B. zusammen mit der Teilnehmer-ID und der ISDN-Nummer - in einem Verzeichnis der beteiligten und berechtigten Netzteilnehmer auf dem Server gespeichert und kann bei Bedarf über die Dienste eines Trust-Centers jederzeit aktualisiert werden. Der zweite Teil wird dem Adressaten auf getrenntem Weg übermittelt.

Ein Entschlüsseln der Ursprungsdaten selbst ist bei diesem Verfahren nicht notwendig. Zum späteren Entschlüsseln der Daten muß nur der - jetzt für den Empfänger lesbare - Session-Key bekannt sein, der bei der Verschlüsselung beispielsweise per Zufall generiert wurde, wie im Ausführungsbeispiel näher erläutert wird.

Auf diese Weise wird vermieden, daß die Daten selbst zu irgendeinem Zeitpunkt auf dem Server in unverschlüsselter Form vorliegen. Im Detail bedeutet dies, daß auf die verschlüsselten Daten während des Umschlüsselungsprozesses überhaupt kein Zugriff erfolgt. Verarbeitet wird lediglich der erste Teil des für Ihre Verschlüsselung verwendeten Session-Keys, der in einem geschlossenen Prozeß aus einer nur für den Server bzw. die am Server installierte erfindungsgemäße Vorrichtung lesbaren in eine für den Anfordernden lesbare Form "umgeschlüsselt" wird.

Der Einsatz der Vorrichtung soll im nachfolgenden anhand eines Ausführungsbeispiels in Verbindung mit der Figur näher erläutert werden. Dieses Beispiel betrifft einen Anwendungsfall im medizinischen Bereich, der ein bevorzugtes Anwendungsfeld der vorliegenden Erfindung darstellt.

Hierbei werden in Kombination mit der erfindungsgemäßen Vorrichtung sowie dem erfindungsgemäßen Verfahren weitere, für sich genommen bereits bekannte Sicherheitsmaßnahmen beschrieben und vorgenommen, die insgesamt eine hochsichere Datenweitergabe in dem genannten Anwendungsfall gewährleisten.

Es versteht sich von selbst, daß die nachfolgend angeführten Kombinationen der einzelnen Sicherheitsmaßnahmen unabhängig voneinander sind, so daß auch die Auslassung eines dieser Schritte, oder der Ersatz durch andere bekannte Sicherheitsmaßnahmen, möglich sind.

Das Beispiel betrifft die elektronische Weitergabe medizinischer Daten über öffentliche Netze. Die hierfür eingesetzten Sicherheitsmaßnahmen gewährleisten den bestmöglichen Schutz dieser sensiblen Daten. Ein typischer Vorgang in diesem Bereich beginnt in der Praxis des Arztes eines Patienten. Der Arzt überweist den Patienten an einen Facharzt, der diesem aufgrund des freien Arztwahlrechtes des Patienten zu diesem Zeitpunkt noch nicht bekannt ist. Üblicherweise wurden dem Patienten bisher hierzu in einem verschlossenen Umschlag die für den Facharzt wichtigen medizinischen Daten zusammen mit der Überweisung übergeben, der diese dem von ihm gewählten Facharzt dann weitergegeben hat.

Wollte der Arzt diese Daten dem Kollegen auf elektronischem Wege übermitteln, so mußte er bisher die Identität dieses Kollegen zum Zeitpunkt der Überweisung bereits kennen. Dies ist mit dem im folgenden geschilderten Verfahren unter Einsatz der erfindungsgemäßen Vorrichtung und des erfindungsgemäßen Verfahrens nicht mehr erforderlich. Das zugrunde liegende System sieht zumindest eine zentrale Datenstation, einen Server, vor, zu dem von Datenstationen der am System beteiligten Stellen, im vorliegenden Fall den externen Rechnern der Ärzte, eine Verbindung hergestellt werden kann. Bezogen auf den oben dargestellten Fall bedeutet dies, daß der überweisende Arzt die für den (noch unbekannten) Kollegen vorgesehenen medizinischen Daten des Patienten auf dem Server ablegt, von dem sich der Kollege diese Daten dann zu einem späteren Zeitpunkt holen kann.

Die Beschreibung der Sicherheitsmechanismen geht dabei zunächst von allgemeinen Sicherheitsaspekten des Systemdesigns aus, beschreibt dann die allgemeine und spezielle Nutzung kryptographischer Verfahren und schließlich die Einbindung und technische Umsetzung der erfindungsgemäßen Vorrichtung.

Jede Form des aktiven Lesens von Daten erfordert ein - gegebenenfalls eingeschränktes - Zugriffsrecht auf die Datenstation, auf der die Daten gespeichert sind. Im vorliegenden Beispiel gestattet das System keinen lesenden Zugriff auf den Server, sondern nur das Absetzen einer Datenanforderung durch die beteiligten Stellen. Bei nachgewiesener Empfangsberechtigung werden die Daten dem Anforderer, im vorliegenden Beispiel also dem die Daten anfordernden Facharzt, über das Netz zugeschickt. Dadurch werden direkte Zugriffe einer externen Stelle auf Datenbestände des Servers weitestgehend unterbunden.

Das beispielhafte Konzept verwendet für die Kommunikation eine Kommunikationsart, die als "remote procedure call" (RPC) bekannt ist. Dabei wird vom externen Rechner eine Aufforderung an den Server gesendet, eine bestimmte Funktion auszuführen und das Ergebnis dieser Funktion als Resultat zurückzugeben. Der Vorteil dieser Kommunikation ist, daß auf dem Server eine problemspezifische Applikation läuft, die nur genau die Operationen ausführt, die in der Systemfunktion vorgesehen sind. Darüber hinausgehende Funktionen, wie z.B. ein direkter Dateizugriff, sind auf diese Weise absolut sicher ausgeschlossen.

Das Konzept sieht weiterhin vor, daß ein Netzteilnehmer zum Aufbau einer Verbindung zunächst immer eine Aufforderung zum Verbindungsaufbau an den Server schickt. Bei dieser Operation selbst erfolgt noch kein Verbindungsaufbau. Es ist vielmehr vorgesehen, diese Anforderung als sogenannte "D-Kanal-Nachricht" zu realisieren. Dabei handelt es sich um eine spezielle Funktion des ISDN-Netzes, bei der noch vor dem "Annehmen" eines Gespräches - damit auch gebührenfrei - nur die Kennung bzw. Nummer des Anrufers übermittelt wird. Anschließend prüft der Server die Übereinstimmung dieser Nummer mit einer am Server gespeicherten Teilnehmerliste, und nur wenn die übermittelte Nummer des Anrufers zu einem "berechtigten" Netzteilnehmer gehört, initiiert der Server einen Rückruf über eine in einer internen Datenbank gespeicherte Nummer.

Der besondere Sicherheitsaspekt dieser Lösung besteht darin, daß zwar die im D-Kanal übertragene Nummer des Anrufers unter bestimmten Umständen fälschbar ("maskierbar") ist, die Verbindung durch den Server aber in jedem Fall mit dem tatsächlichen Inhaber dieser Nummer, also einen berechtigten Netzteilnehmer aufgebaut wird. Damit wird im ungünstigsten Falle ein Verbindungsaufbau zu einem Netzteilnehmer angestoßen, der diesen gar nicht angefordert hatte, jedoch zum Kreis der Berechtigten gehört. In einem derartigen Fall kann es zu keiner Datenübertragung kommen, da der Rechner des unaufgefordert zurückgerufenen Teilnehmers keine Datenanforderung bereithält, und damit auch nicht zum Verbindungsaufbau bereit ist.

Das vorliegend beschriebene beispielhafte Konzept basiert darauf, Dokumente im Sinne eines "Mailings" einmalig zu übertragen. Sobald ein Dokument vom Server durch einen berechtigten Adressaten abgefordert und diesem zugestellt wurde, wird es auf dem Server gelöscht (zunächst logisch, dann auch physisch). Dies ist speziell im vorliegenden Anwendungsfall möglich, da die Daten jeweils nur für einen Adressaten vorgesehen sind. Sollen die Daten mehreren Adressaten zugänglich sein, wird diese Maßnahme nicht vorgesehen.

Alle Dokumente werden weiterhin mit einem Verfallsdatum versehen, nach dessen Ablauf sie ebenfalls physisch gelöscht werden. Damit entsteht keine Akkumulation von Daten auf dem Server, womit auch die Zusammenführung von unterschiedlichen Dokumenten, die etwas über einen Patienten oder auch über einen Arzt aussagen könnten, unmöglich gemacht wird. Die Identifikation der Dokumente erfolgt über eine einmalig nur für diesen Kommunikationsvorgang vergebene Vorgangs-ID, die keinen Rückschluß auf den Patienten zuläßt. Diese ID muß dem anfordernden Arzt bekannt sein, und wird ihm vorzugsweise mit dem zugehörigen Papierdokument durch den Patienten übermittelt.

Zusätzlich zu den oben beschriebenen Sicherheitsmaßnahmen werden alle Daten für die Übertragung und Speicherung verschlüsselt und signiert. Dazu werden kryptographische Standardverfahren mit sicherem Austausch von Schlüsseln, beispielsweise entsprechend X.509, eingesetzt. Dabei handelt es sich um symmetrische Verschlüsselungsverfahren wie Triple DES, "blowfish" oder IDEA für die Verschlüsselung großer Datenmengen und asymmetrische Verschlüsselungsverfahren wie RSA oder elliptische Verschlüsselungsverfahren für die digitale Signatur (Verschlüsselung eines Hash-Wertes) und die Verschlüsselung des symmetrischen Session-Keys.

Zur Sicherung der Authentizität und Integrität der übertragenen Daten wird jedes Dokument vor dem Versand mit dem privaten Schlüssel des Absenders, im vorliegenden Fall des überweisenden Arztes, signiert. Dazu wird ein Hash-Wert ermittelt und dieser mit dem privaten Schlüssel des Absenders asymmetrisch verschlüsselt. Die Signatur des Dokumentes bleibt auch nach dem Entschlüsseln (siehe nachfolgende Schritte) erhalten und steht somit für den forensisch relevanten Nachweis der Echtheit des Dokumentes zur Verfügung. Voraussetzung für den Nachweis der Echtheit ist allerdings, daß das Dokument beim Empfänger in der signierten Form gespeichert wird, gegebenenfalls zusätzlich zur lesbaren Version ohne Signatur. Ein getrenntes Speichern von Dokument und Signatur ist möglich, birgt jedoch die Gefahr, daß durch ungewollte Modifikation des Dokumentes - z.B. beim Öffnen im Textverarbeitungssystem - die Signatur ungültig wird. Die Archivierung des Dokuments obliegt dem Empfänger.

Die Einzeldokumente werden mit einem zufällig generierten Schlüssel (Session-Key) der Länge N (N sollte aus Sicherheitsgründen größer oder gleich 128 sein) symmetrisch verschlüsselt. Der zum Verschlüsseln verwendete Session-Key wird mit dem öffentlichen Schlüssel des Servers, d.h. der am Server installierten erfindungsgemäßen Vorrichtung, verschlüsselt. Die Schlüssellänge sollte aus Sicherheitsgründen mindestens 1024 Bit betragen.

Da das Dokument inklusive Signatur verschlüsselt wird, kann der Server ohne Entschlüsselung der Daten die Echtheit des Dokumentes - auch im Sinne seiner fehlerfreien Übertragung und seiner Existenz an sich (elektronisches "Einschreiben") - nicht überprüfen. Um dies zu ermöglichen, wird das signierte und verschlüsselte Dokument nochmals zusätzlich signiert.

Das wie oben beschrieben vorbereitete Dokument wird als MIME-kompatibles File aufbereitet und in dieser Form mittels eines entsprechenden RPC an den Server übermittelt.

Auf dem Server wird das Dokument aus dem MIME-Format entpackt und die äußere Signatur kontrolliert und dabei entfernt. Damit wird die Unversehrtheit, d.h. die Vollständigkeit und Originalität, des Dokumentes überprüft und kann protokolliert werden. Nach erfolgter Ablage des (verschlüsselten) Dokumentes wird eine vom Server mit dessen persönlichem Schlüssel signierte Empfangsbestätigung an den Absender zurückgegeben als zweifelsfreier Nachweis der erfolgten Ablage des Dokumentes.

Das weiterzuleitende Dokument wird auf dem Server in der (innen) signierten und dann verschlüsselten Form gespeichert. In dieser verschlüsselten Form ist es von niemandem zu entschlüsseln.

Als Ablage- bzw. Zugriffskriterium zum Verwalten des verschlüsselten Dokuments dient eine unverschlüsseit nitgelieferte Vorgangs-ID, die zu jedem Vorgang gehört. Diese Vorgangs-ID, wird, wie bereits oben dargelegt, dem später durch den Patienten ausgewählten Arzt durch diesen auf direktem Wege übermittelt. Für den Server ist diese ID aus der übersandten Datenanforderung ersichtlich, deren Bestandteil sie ist.

Daten können vom Server durch Mitglieder des jeweiligen Netzes unter Angabe dieser jeweiligen Vorgangs-ID, ihrer ISDN-Nummer und ihrer Arztkennung angefordert werden.

Zur weiteren Erhöhung der Sicherheit können zusätzliche Identifikatoren, z.B zur Kennzeichnung des jeweiligen Patienten, notwendig sein.

Bei der Anforderung der Daten durch den betreffenden Facharzt erfolgt eine Umschlüsselung der Daten durch die erfindungsgemäße Vorrichtung, so daß sie für einen den anfordernden Arzt lesbar werden. Dazu wird der für die symmetrische Verschlüsselung der Daten verwendete Session-Key mit dem im Server vorhandenen privaten Schlüssel des Servers entschlüsselt und sofort wieder mit dem öffentlichen Schlüssel des anfordernden Empfängers verschlüsselt. Dieser öffentliche Schlüssel ist - zusammen mit der Arzt-ID und der ISDN-Nummer - im Verzeichnis der beteiligten Netzärzte gespeichert und kann über die Dienste eines einbezogenen Trust-Centers jederzeit aktualisiert werden.

Ein Entschlüsseln der medizinischen Daten selbst ist nicht notwendig. Zum späteren Entschlüsseln der Daten muß nur der - jetzt für den Empfänger lesbare - Session-Key bekannt sein, der bei der Verschlüsselung per Zufall generiert wurde.

Auf diese Weise wird vermieden, daß die medizinischen Daten selbst zu irgendeinem Zeitpunkt auf dem Server in unverschlüsselter Form vorliegen. Auf die verschlüsselten Daten erfolgt während des Umschlüsselungsprozesses keinerlei Zugriff. Verarbeitet wird lediglich der für Ihre Verschlüsselung verwendete Session-Key, der in einem geschlossenen Prozeß aus einer nur für den Server lesbaren in eine für den Anfordernden lesbare Form "umgeschlüsselt" wird.

Das für den Versand an den Empfänger verschlüsselte Dokument wird nochmals zur Sicherung der korrekten Übertragung zum Empfänger und einer eventuell gewünschten Protokollierung signiert, und zwar durch den Server mit dessen persönlichem Schlüssel.

Das wie oben beschrieben vorbereitete Dokument wird wiederum als MIME-kompatibles File aufbereitet und in dieser Form als Rückgabewert eines RPC zur Datenanforderung an den Anforderer geschickt.

Beim Empfänger wird das Dokument aus dem MIME-Format entpackt und die äußere Signatur kontrolliert und dabei entfernt. Damit wird wiederum die Unversehrtheit, d.h. Vollständigkeit und Originalität, des Dokumentes überprüft. Eine vom Empfänger mit dessen persönlichem Schlüssel signierte Empfangsbestätigung wird an den Server zurückgegeben als zweifelsfreier Nachweis der erfolgten Übermittlung des Dokumentes.

Mittels des persönlichen Schlüssels des Empfängers kann dieser den verschlüsselten Session-Key entschlüsseln und mit diesem wiederum die Daten selbst. Danach liegen diese lesbar nur noch in der durch den Absender signierten Form vor.

Die Signatur des Ausgangsdokumentes dient der Nachweisbarkeit seiner Originalität. Um diese zu erhalten ist es notwendig, das Dokument in der signierten Form aufzubewahren.

Ein möglicher Angriffspunkt auf die Daten ist der private Schlüssel des Servers. Da alle eingelagerten Daten - genauer gesagt alle Session-Keys der eingelagerten Daten - mit demselben Schlüssel des Servers lesbar sind, lohnt sich ein Angriff auf diesen Schlüssel einerseits besonders, andererseits wird er durch die Menge vorliegender Daten erleichtert.

Um diesem Umstand vorzubeugen, wird bei der vorliegenden Erfindung als zusätzlicher Sicherheitsmechanismus eine Zweiteilung des Session-Keys eingeführt.

Wie weiter oben beschrieben, werden die Ursprungsdaten mit einem N-stelligen (N vorzugsweise größer oder gleich 128) symmetrischen Schlüssel verschlüsselt. Dieser Schlüssel wird üblicherweise für die Übertragung asymmetrisch und nur für den Empfänger lesbar verschlüsselt. Die - auch gewaltsame - Entschlüsselung des Session-Keys reicht damit aus, um die Daten selbst entschlüsseln zu können.

Um dies zu verhindern, wird folgende Modifikation eingeführt. Bei dieser Modifikation wird der Session-Key vor seiner asymmetrischen Verschlüsselung zweigeteilt. Beispielsweise werden M (0 < M < N) der N Bits des Session-Keys als sogenannter "Vorgangsschlüssel" herausgelöst. Nur die verbleibenden (N-M) Bits des Session-Keys werden asymmetrisch verschlüsselt und mit den Daten übertragen.

Die Umschlüsselung der Daten mit reduziertem Session-Key kann in genau derselben Weise erfolgen, wie oben in Zusammenhang mit einem vollständigen Session-Key beschrieben. Da die Daten selbst auch dort nie entschlüsselt werden müssen, ist der vollständige Session-Key nicht notwendig. Es wird lediglich der rudimentäre Session-Key durch den Server entschlüsselt und für den Anforderer wieder verschlüsselt.

Die Entschlüsselung beim Empfänger unterscheidet sich von der oben beschriebenen Vorgehensweise dahingehend, daß nach der Entschlüsselung des Session-Keys mittels privatem Schlüssel des Empfängers dieser Session-Key um die beim Absender separierten M Bits des Vorgangsschlüssels erweitert werden muß. Danach kann die Entschlüsselung wie oben dargestellt erfolgen.

Der beim Absender der Daten erzeugte Vorgangsschlüssel, d.h. die separierten M Bits, wird an die ebenfalls dort erzeugte Vorgangs-ID angefügt. Die Kombination.von Vorgangs-ID und Vorgangsschlüssel ergibt die sogenannte Vorgangskennung, die auf dem den Vorgang begleitenden Papierdokument (Überweisungschein, Einweisungsschein, Rezept, ...) aufgedruckt und beim Empfänger erfaßt wird. Der in der Vorgangskennung enthaltene Vorgangs schlüssel wird niemals zum Server übertragen, so daß dort nie alle Informationen zusammenkommen, die ausreichen würden, um ein Dokument tatsächlich zu entschlüsseln.

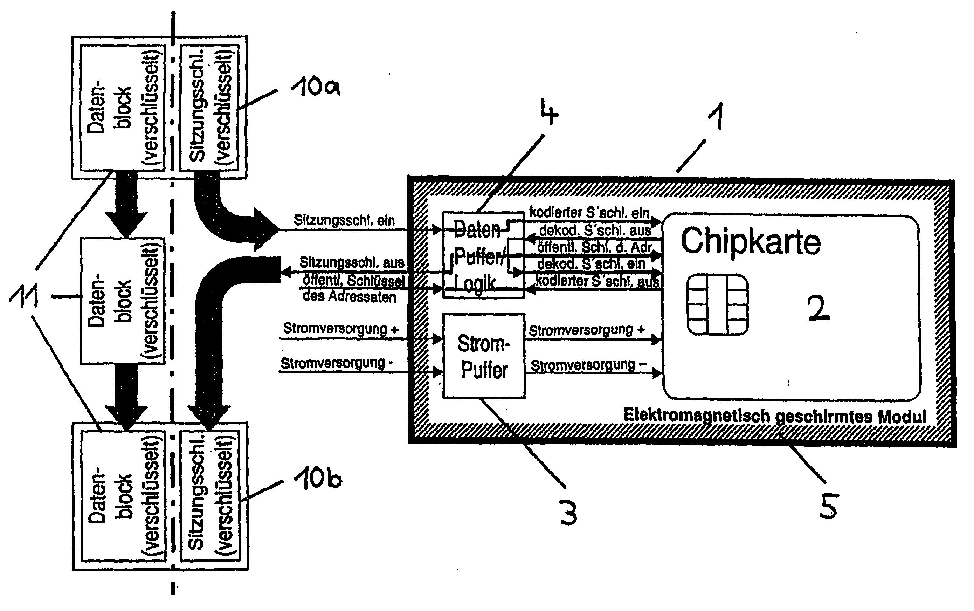

Ein Beispiel für eine erfindungsgemäße Vorrichtung, wie sie für die Durchführung des obigen Anwendungsbeispiels eingesetzt wird, ist in Figur 1 dargestellt.

Die Vorrichtung ist vorzugsweise in Form eines Einsteckmoduls 1 (Umschlüsselungsmodul) zum modularen Einbau in den Server ausgebildet. Das Modul 1 beinhaltet im vorliegenden Beispiel eine Chipkarte 2, die die Entschlüsselung des verschlüsselten Session-Keys 10a mit Hilfe des in der Chipkarte 2 gespeicherten privaten Schlüssels des Servers und die erneute Verschlüsselung des Session-Keys mit dem öffentlichen Schlüssel des Adressaten bzw. Anfordernden der Daten vornimmt. Der private Schlüssel des Servers ist dabei von außerhalb der Chipkarte bzw. des Moduls nicht zugänglich. Der öffentliche Schlüssel des Anfordernden wird der Vorrichtung 1, ebenso wie der umzuschlüsselnde Session-Key 10a über eine dafür vorgesehene Schnittstelle zugeführt. Über eine weitere Schnittstelle wird der neu verschlüsselte Session-Key 10b ausgegeben.

Der Prozessor des Servers selbst übernimmt hierbei die Aufgabe, den Session-Key 10a von dem verschlüsselten Datenblock 11 abzutrennen, der Vorrichtung 1 zuzuführen und den von der Vorrichtung gelieferten, neu verschlüsselten bzw. umgeschlüsselten Session-Key 10b wieder an den Datenblock 11 anzufügen, wie in der Figur schematisch dargestellt ist.

Es ist allerdings auch möglich, diese Trennung und erneute Zusammenführung direkt in der Vorrichtung 1 vorzunehmen. Hierbei müßte der Vorrichtung der gesamte Datenblock 11 mit dem Session-Key 10a zugeführt werden.

Der persönliche Schlüssel des Servers ist zweifelsohne ein problematischer Punkt im Hinblick auf gezielte unberechtigte Zugriffsversuche auf die Daten.

Üblicherweise dürfen bzw. sollten Schlüssel nicht auf dem Rechner gespeichert werden, auf dem die verschlüsselten Daten gespeichert bzw. bearbeitet werden. Dies ist jedoch bei automatischer Arbeit des Servers, wie im vorliegenden Fall, unumgänglich. Aus diesem Grunde ist im vorliegenden Ausführungsbeispiel vorgesehen, die Vorrichtung als gekapselte und plombierte Einheit auszugestalten, die in der Lage ist, die vollständige Prozedur der Datenumschlüsselung intern zu handhaben, ohne daß der entschlüsselte (auch rudimentäre) Session-Key oder auch nur Spuren seiner Entschlüsselung die autonome Einheit verlassen.

Heutzutage sind bereits Schlüsselkarten am Markt verfügbar, die in der Lage sind, die asymmetrische Verschlüsselung eines 128 Bit Session-Keys nach einem 1024 Bit RSA-Verfahren vollständig auf dem Chip der Karte auszuführen. Demnächst werden solche Karten auch für 2048 Bit Schlüssel zur Verfügung stehen. Insbesondere besteht die Möglichkeit, das Schlüsselpaar (öffentlicher Schlüssel - privater Schlüssel) direkt auf der Karte oder in einem gesetzeskonformen, zertifizierten Trust-Center generieren zu lassen, ohne daß der private Schlüssel der Karte diese jemals verläßt. Eine solche Schlüsselkarte kann in der erfindungsgemäßen Vorrichtung als Chipkarte 2 eingesetzt werden. Hierbei wird dieser Karte 2 in einem ersten Schritt zunächst der verschlüsselte Session-Key 10a zugeführt. Dieser wird mit Hilfe des privaten Schlüssels des Karte, weiter oben als der private Schlüssel des Servers bezeichnet, entschlüsselt. Der entschlüsselte Session-Key wird von der Karte 2 ausgegeben, ohne die Vorrichtung 1 jedoch zu verlassen. Er wird vielmehr in einem zweiten Schritt der Karte 2 erneut, diesmal zusammen mit dem öffentlichen Schlüssel des Adressaten eingegeben. Die Karte 2 liefert in diesem zweiten Schritt den neu verschlüsselten Session-Key 10b zurück. Dies ist schematisch durch die Pfeile innerhalb der Vorrichtung 1 in der Figur angedeutet. Die hierfür zusätzlich erforderliche Schaltung, Puffer-Einheit 4, dient u.a. zur-zeitlichen Koordination dieser Vorgänge. Diese Puffer-Einheit 4 kann beispielsweise durch einen geeignet programmierten Mikroprozessor oder mittels einer Logikschaltung realisiert werden.

- Um zu verhindern, daß aus Modulationen auf der Stromversorgung der Vorrichtung Rückschlüsse auf die internen Abläufe möglich sind, ist in der vorliegenden Ausführungsform der Vorrichtung eine Konstantstromschaltung 3 vorgesehen, die garantiert, daß die Vorrichtung im Rahmen eines definierten Intervalls der Versorgungsspannung eine konstante und modulationsfreie Stromaufnahme vorweist. Bei Unter- oder Überschreiten bestimmter Grenzen der Betriebsspannung oder anderer Betriebsparameter, wie z.B. der Temperatur, schaltet sich die Vorrichtung mit einer Fehlermitteilung ab.

Da auch aus dem Zeitverhalten der Vorrichtung Rückschlüsse auf die internen Vorgänge gezogen werden könnten, können alle Eingangsdaten zunächst in der Puffer-Einheit 4 oder einer speziell dafür vorgesehenen Einheit gepuffert, und nach einer ständig gleichen Zeit die Ergebnisse ausgegeben werden, unabhängig davon, weiche Zeit die internen Abläufe in Anspruch genommen haben.

Ein "Abhören" der elektromagnetischen Vorgänge in der Vorrichtung wird im vorliegenden Ausführungsbeispiel durch eine elektromagnetische Abschirmung 5 der Vorrichtung verhindert.

Als Schnittstelle der Vorrichtung ist einerseits eine Schnittstelle für die Eingabe des asymmetrisch verschlüsselten Session-Keys 10a (bzw. des Rudimentes dieses Schlüssels) und des öffentlichen Schlüssels des anfordernden Empfängers vorgesehen. Andererseits muß eine Schnittstelle für die Ausgabe des asymmetrisch verschlüsselten Session-Keys 10b (bzw. dessen Rudiment) vorhanden sein. Beide Schnittstellen können bei geeigneter Ausführung physikalisch identisch sein.

Weiterhin können für die Erzeugung bzw. Überprüfung von Signaturen Schnittstellen für die Eingabe des Hash-Wertes des zu signierenden Dokumentes und für die Ausgabe des symmetrisch verschlüsselten Hash-Wertes, d.h. der Signatur vorgesehen sein.

Obwohl die vorangehend beschriebenen Maßnahmen in Zusammenhang mit dem zugrunde liegenden Beispielfall dargestellt wurden, lassen sich dieses Konzept und die erfindungsgemäße Vorrichtung selbstverständlich auch auf andere Bereiche anwenden, bei denen eine sichere Datenübertragung zwischen zwei Datenstationen über eine Zwischenlagerung auf einem Server erforderlich ist.

Weiterhin ist die Erfindung nicht auf die Weiterleitung der Daten nur über eine Zwischenstation bzw. einen Server beschränkt. So können die Daten auch über mehrere Server geleitet werden, wobei der Abruf der Daten durch einen weiteren Server jeweils wie der Abruf durch einen Adressaten ausgeführt wird. Auf dem weiteren Server werden dann die Daten in gleicher Form wie auf dem ersten Server behandelt, d.h. auch dieser weitere Server muß die erfindungsgemäße Vorrichtung aufweisen.

## Patentansprüche

1. Vorrichtung für die sichere Übertragung bzw. Weiterleitung von verschlüsselten Daten von einer ersten Datenstation über eine zweite Datenstation zu einer dritten Datenstation eines Netzwerkes, mit
- einer Eingangseinheit zum Empfangen der verschlüsselten Daten (10a) von der ersten Datenstation sowie eines externen Schlüssels eines Anforderers von der dritten oder einer weiteren Datenstation,
- einer Einheit (2) zum Umschlüsseln der verschlüsselten Daten durch Entschlüsseln mit einem internen Schlüssel und erneutes Verschlüsseln mit dem externen Schlüssel, wobei der interne Schlüssel von außerhalb der Vorrichtung nicht zugänglich ist; und
- einer Ausgangseinheit zum Ausgeben der mit dem externen Schlüssel verschlüsselten Daten (10b),
**dadurch gekennzeichnet,**
**dass** die Vorrichtung derart an oder in der zweiten Datenstation ausgebildet ist, dass die Einheit (2) die Daten erst bei Anforderung durch die dritte Datenstation mit Hilfe des externen Schlüssels des Anforderers umschlüsselt und die Daten während der Umschlüsselung die Vorrichtung nicht verlassen, so dass sie nicht in unverschlüsselter Form außerhalb der Vorrichtung auf der zweiten Datenstation zugänglich sind.

2. Vorrichtung nach Anspruch 1,
**dadurch gekennzeichnet, daß** der interne Schlüssel innerhalb der Einheit (2) zum Entschlüsseln und Verschlüsseln auf einem geeigneten Datenträger gespeichert ist.

3. Vorrichtung nach Anspruch 1 oder 2,
**dadurch gekennzeichnet, daß** die Einheit (2) zum Entschlüsseln und Verschlüsseln eine Chipkarte als Träger des internen Schlüssels umfaßt.

4. Vorrichtung nach Anspruch 1 oder 2,
**dadurch gekennzeichnet, daß** die Einheit (2) zum Entschlüsseln und Verschlüsseln eine aktive Chipkarte mit integriertem Prozessor umfaßt, die die Ent- und Verschlüsselung der Daten ganz oder teilweise übernimmt.

5. Vorrichtung nach einem der Ansprüche 1 bis 4,
**dadurch gekennzeichnet, daß** sie eine Puffer- und Logik-Einheit (4) zur zeitlichen Steuerung des Datenflusses in der Vorrichtung aufweist, die der Einheit (2) zum Entschlüsseln und Verschlüsseln zunächst die verschlüsselten Daten (10a) zur Entschlüsselung zuführt und entschlüsselt zurückerhält, und die anschließend der Einheit (2) zum Entschlüsseln und Verschlüsseln die entschlüsselten Daten zur Verschlüsselung mit dem externen Schlüssel zuführt und als verschlüsselte Daten (10b) zurückerhält.

6. Vorrichtung nach einem der Ansprüche 1 bis 5,
**dadurch gekennzeichnet, daß** die Eingangseinheit und die Ausgangseinheit Standardschnittstellen für die Ein- und Ausgabe der Daten aufweisen.

7. Vorrichtung nach einem der Ansprüche 1 bis 6,
**dadurch gekennzeichnet, daß** die Einheit (2) zum Entschlüsseln und Verschlüsseln asymmetrische Verschlüsselungsverfahren einsetzt.

8. Vorrichtung nach einem der Ansprüche 1 bis 7,
**dadurch gekennzeichnet, daß** sie mit einer vollständigen mechanischen und elektromagnetischen Kapselung (5) und mit einer Möglichkeit zur Versiegelung versehen ist.

9. Vorrichtung nach einem der Ansprüche 1 bis 8,
**dadurch gekennzeichnet, daß** eine Puffer-Einheit vorgesehen ist, die alle Datenströme innerhalb der Vorrichtung zum Ausgleich von eventuell vom internen Schlüssel abhängigen Verarbeitungszeiten puffert, so daß die Ausgabe der Daten der Vorrichtung nach einer prozeßunabhängigen Zeitspanne erfolgt.

10. Vorrichtung nach einem der Ansprüche 1 bis 9,
**dadurch gekennzeichnet, daß** eine Einheit (3) zum Puffern der Stromaufnahme der Vorrichtung vorgesehen ist, so daß die Stromaufnahme der Vorrichtung unabhängig von der vom internen Schlüssel abhängigen Stromaufnahme der Einheit (2) zum Entschlüsseln und Verschlüsseln oder weiterer interner Schaltkreise ist.

11. Vorrichtung nach einem der Ansprüche 1 bis 10,
die weiterhin eine Einheit zum Empfangen eines ersten Datenblockes, der die verschlüsselten Daten (10a) neben weiteren Daten (11) beinhaltet, und zum Abtrennen der verschlüsselten Daten (10a) von den weiteren Daten (11) sowie eine Einheit zum Zusammenführen der weiteren Daten (11) mit den erneut verschlüsselten Daten (10b) zu einem zweiten Datenblock und zur Ausgabe des zweiten Datenblockes aufweist, wobei die verschlüsselten Daten einen Schlüssel darstellen, mit dem die weiteren Daten (11) verschlüsselt sind.

12. Verfahren für die sichere Übertragung von Daten von einer ersten Datenstation über eine zweite Datenstation zu einer dritten Datenstation unter Einsatz der Vorrichtung gemäß einem der vorangehenden Ansprüche an oder in der zweiten Datenstation, mit folgenden Schritten:
- Verschlüsseln der Daten in der ersten Datenstation mit einem ersten Schlüssel (10a);
- Aufteilen des ersten Schlüssels (10a) in einen ersten Teil und einen zweiten Teil, so dass weder der erste noch der zweite Teil alleine die Entschlüsselung der verschlüsselten Daten ermöglicht;
- Verschlüsseln des ersten Teils des ersten Schlüssels (10a) in der ersten Datenstation mit einem öffentlichen Schlüssel der zweiten Datenstation;
- Übermitteln der verschlüsselten Daten (11) zusammen mit dem verschlüsselten ersten Teil des ersten Schlüssels (10a) an die zweite Datenstation;
- Speichern der verschlüsselten Daten (11) und des verschlüsselten ersten Teils des ersten Schlüssels (10a) in der zweiten Datenstation;
- Anfordern der Daten durch die dritte Datenstation, deren Identität der zweiten Datenstation erst durch die Anforderung mitgeteilt wird;
- Entschlüsseln des verschlüsselten ersten Teils des ersten Schlüssels in der zweiten Datenstation mit einem zum öffentlichen Schlüssel passenden privaten Schlüssel der zweiten Datenstation und erneutes Verschlüsseln des vorher entschlüsselten ersten Teils des ersten Schlüssels mit einem öffentlichen Schlüssel der dritten Datenstation; und
- Übermitteln der verschlüsselten Daten (11) zusammen mit dem erneut verschlüsselten ersten Teil des ersten Schlüssels (10b) an die dritte Datenstation;
- Entschlüsseln des verschlüsselten ersten Teils des ersten Schlüssels (10b) in der dritten Datenstation mit einem zum öffentlichen Schlüssel der dritten Datenstation passenden privaten Schlüssel;
- Vervollständigung des ersten Schlüssels (10a) durch Ergänzung des ersten Teils mit dem auf getrenntem Weg von der ersten an die dritte Datenstation übermittelten zweiten Teil des ersten Schlüssels in der dritten Datenstation;
- Entschlüsseln der verschlüsselten Daten (11) mit dem vervollständigten ersten Schlüssel (10a) in der dritten Datenstation.

13. Verfahren nach Anspruch 12, wobei der öffentliche Schlüssel der dritten Datenstation aus einer internen Datenbank der zweiten Datenstation entnommen oder durch Rückfrage bei einem Trust-Center ermittelt wird.

## Claims

1. A device for secure transmission respectively forwarding of coded data from a first data station via a second data station to a third data station of a network, having
- an input unit for receiving said coded data (10a) from said first data station and an external key of a requester from said third data station or another data station,
- a unit (2) for recoding said coded data by decoding with an internal key and renewed encoding with said external key, with said internal key not being accessible from outside said device; and
- an output unit for issuing said data (10b) encoded with said external key,
**characterised in that**
said device is designed at or in said second data station in such a manner that said unit (2) does not recede the data with the aid of said external key of the requestor until so requested by said third data station and the data do not leave the device during the recoding so that the data are not accessible in a decoded form outside said device on said second data station.

2. A device according to claim 1,
**characterised in that** said internal key is stored on a suited data carrier inside said unit (2) for decoding and encoding.

3. A device according to claim 1 or 2,
**characterised in that** said unit (2) for decoding and encoding comprises a chip card as said carrier of said internal key.

4. A device according to claim 1 or 2,
**characterised in that** said unit (2) for decoding and encoding comprises an active chip card with an integrated processor, which partly or completely assumes the decoding and encoding of said data.

5. A device according to one of the claims 1 to 4,
**characterised in that** said device is provided with a buffer and logic unit (4) for temporal control of the data flow in said device, said buffer and logic unit (4) first conveys said coded data (10a) for decoding to said unit (2) for decoding and encoding and receives said data back decoded, and said buffer and logic unit (4) subsequently conveys said decoded data for encoding with said external key to said unit (2) for decoding and encoding and receives it back as coded data (10b).

6. A device according to one of the claims 1 to 5,
**characterised in that** said input unit and said output unit are provided with standard interfaces for the input and output of said data.

7. A device according to one of the claims 1 to 6,
**characterised in that** said unit (2) for encoding and decoding utilizes asymmetrical encoding processes.

8. A device according to one of the claims 1 to 7,
**characterised in that** said device is provided with a complete mechanical and electromagnetic encapsulation (5) and with a possibility of sealing.

9. A device according to one of the claims 1 to 8,
**characterised in that** a buffer unit is provided which buffers all the data flows inside said device to compensate for possible internal-key-dependent processing times so that the data output of said device occurs according to a process-independent time span.

10. A device according to one of the claims 1 to 9,
**characterised in that** a unit (3) is provided for buffering the current input of said device in such a manner that said current input of said device is independent of the current input of said unit (2) for decoding and encoding, which is dependent on said internal key, or of other internal circuits.

11. A device according to one of the claims 1 to 10,
which is further provided with a unit for receiving a first data block containing said coded data (10a) in addition to further data (11) and for separating said coded data (10a) from said further data (11) and with a unit for joining said further data (11) with the recoded data (10b) to a second data block and for the output of said second data block, with said encoded data representing a key with which said further data (11) are encoded.

12. A process for secure data transmission from a first data station via a second data station to a third data station using the device according to one of the preceding claims at or in said second data station, having the following steps:
- encoding of the data in said first data station with a first key (10a);
- dividing said first key (10a) in a first part and a second part in such a manner that neither
solely said first part nor solely said second part permit decoding said coded data;
- encoding said first part of said first key (10a) in said first data station using a public key of said second data station;
- transmission of said coded data (11) together with said coded first part of said first key (10a) to said second data station;
- storage of said coded data (11) and of said coded first part of said first key (10a) in said second data station;
- request of said data by said third data station whose identity is not passed on to said second data station until by the request;
- decoding of said coded first part of said first key in said second data station with a private key of said second data station which matches said public key and recoding of said previously decoded first part of said first key using a public key of said third data station; and
- transmission of said coded data (11) together with said recoded first part of said first key (10b) to said third data station;
- decoding said coded first part of said first key (10b) in said third data station with a private key which matches said public key of said third data station;
- completion of said first key (10a) in said third data station by adding to said first part said second part of said first key transmitted from said first to said third data station on a separate path;
- decoding said coded data (11) using said completed first key (10a) in said third data station.

13. A process according to claim 12, whereby said public key of said third data station is taken from an internal data bank of said second data station or is determined by consultation with a trust center.

## Revendications

1. Dispositif pour la transmission sûre ou respectivement le transfert des données codées à partir d'un premier terminal via un deuxième terminal vers un troisième terminal d'un réseau, comprenant
- une unité d'entrée à recevoir des données codées (10a) du premier terminal ainsi qu'un code externe d'un demandeur du troisième ou d'un autre terminal,
- une unité (2) a recoder les données codées par décodage moyennant un code interne et par nouveau codage moyennant ledit code externe, au code interne n'étant pas accessible de l'extérieur du dispositif ; et
- une unité de sortie à sortir les données codées (10b) moyennant ledit code externe,
**caractérisé en ce**
**que** le dispositif est configuré à ou dans ledit deuxième terminal d'une telle manière, que l'unité (2) ne recode les données qu'en réponse à la demande par le troisième terminal moyennant ledit code externe du demandeur, et en ce que les données ne sortent pas du dispositif au cours du recodage de telle façon, qu'elles ne soient pas accessibles sous forme non codée en dehors du dispositif au deuxième terminal.

2. Dispositif selon la revendication 1,
**caractérisé en ce que** ledit code interne est mis en mémoire sur un support d'informations à l'intérieur de ladite unité (2) à décoder et coder.

3. Dispositif selon la revendication 1 ou 2,
**caractérisé en ce que** ladite unité (2) à décoder et coder comprend une carte à puce en tant que porteur du code interne.

4. Dispositif selon la revendication 1 ou 2,
**caractérisé en ce que** ladite unité (2) à décoder et coder comprend une carte à puce active à un processeur y intégré, qui sert à la fonction de décodage et codage des données complètement ou en partie.

5. Dispositif selon une quelconque des revendications 1 à 4,
**caractérisé en ce que** qu'il comprend une unité de tampon et logique (4) pour la commande à synchronisation du flux de données dans le dispositif, qui transfère d'abord les données codées (10a) pour leur décodage à ladite unité (2) à décoder et coder et les reçoit sous forme décodée, et qui transfère ensuite les données décodées à ladite unité (2) à décoder et coder pour leur codage moyennant le code externe et les reçoit sous forme de données codées (10b).

6. Dispositif selon une quelconque des revendications 1 à 5,
**caractérisé en ce que** ladite unité d'entrée et ladite unité de sortie comprennent des interfaces standard pour l'entrée et sortie des données:

7. Dispositif selon une quelconque des revendications 1 à 6,
**caractérisé en ce que** ladite unité (2) à décoder et coder applique des méthodes de codage non symétriques.

8. Dispositif selon une quelconque des revendications 1 à 7,
**caractérisé en ce qu'**il est muni d'une boîte (5) complète mécanique à blindage électromagnétique et des moyens permettant le scellement.

9. Dispositif selon une quelconque des revendications 1 à 8,
**caractérisé en ce qu'**une unité de tampon est disposée, qui met tous les flux de données en mémoire tampon à l'intérieur du dispositif afin de compenser des temps de traitement éventuellement dépendants du code interne, d'une telle manière que la sortie des données du dispositif se fait après une période de temps non dépendante du processus.

10. Dispositif selon une quelconque des revendications 1 à 9,
**caractérisé en ce qu'**une unité (3) est disposé à tamponner le courant consommé par le dispositif d'une telle manière, que la consommation de courant du dispositif soit indépendant de la consommation de courant de ladite unité (2) à décoder et coder ou des autres circuits internes, qui est dépendante du code interne.

11. Dispositif selon une quelconque des revendications 1 à 10,
**caractérisé en ce qu'**il comprend au plus une unité à recevoir un premier bloc de données, qui renferme les données codées (10a) et au plus des autres données (11), et à séparer lesdites données codées (10a) des autres données (11), ainsi qu'une unité à combiner lesdites autres données (11) avec les données recodées (10b), en formant un deuxième bloc de données, et à sortir ledit deuxième bloc de données, aux données codées représentant un code utilisé pour le codage desdites autres données (11).

12. Procédé de transmission sûre des données codées à partir d'un premier terminal via un deuxième terminal vers un troisième terminal, en employant le dispositif selon une quelconque des revendications précédentes à ou dans ledit deuxième terminal, comprenant les opérations suivantes :
- codage des données dans le premier terminal moyennant un premier code (10a) ;
- séparation du premier code (10a) en une première partie et une deuxième partie, d'une telle manière, que ni la première, ni la deuxième partie en soi permit le décodage des données codées ;
- codage de la première partie du premier code (10a) dans le premier terminal moyennant un code public du deuxième terminal ;
- transmission des données codées (11) ensemble avec ladite première partie codée du premier code (10a) au deuxième terminal;
- mise en mémoire desdites données codées (11) et de ladite première partie codée du premier code (10a) dans le deuxième terminal ;
- demande des données par ledit troisième terminal, dont l'identité n'est communiqué au deuxième terminal que par la demande ;
- décodage de ladite première partie codée dudit premier code dans le deuxième terminal moyennant un code privée du deuxième terminal, qui est en rapport avec ledit code public, et nouveau codage de ladite première partie du premier code, décodé auparavant, moyennant un code public dudit troisième terminal ; et
- transmission des données codées (11) ensemble avec la première partie recodée dudit premier code (10b) audit troisième terminal ;
- décodage de ladite première partie codée dudit premier code (10b) dans ledit troisième terminal moyennant un code privé, qui est en rapport avec ledit code public dudit troisième terminal ;
- complètement dudit premier code (10a) en complétant ladite première partie par ladite deuxième partie dudit premier code, qui est transmise dudit premier terminal sur une voie séparée audit troisième terminal, dans ledit troisième terminal ;
- décodage des données codées (11) moyennant ledit premier code complété (10a) dans ledit troisième terminal.

13. Procédé selon la revendication 12, dans lequel ledit code public du troisième terminal est prélevé d'une base interne de données dans ledit deuxième terminal ou est établi par interrogation à un centre fiduciaire de gestion.
